# EUROPÄISCHE PATENTSCHRIFT

(11) **EP 0 648 960 B1**
(45) Veröffentlichungstag und Bekanntmachung des Hinweises auf die Patenterteilung: **28.05.1997**
(21) Anmeldenummer: 94116198.6
(22) Anmeldetag: 13.10.1994
(51) Int. Cl.: F16H 61/06

(54) **Eichverfahren für Getriebesteuerkupplung und -bremsen**
Calibration method for transmission clutch and brakes
Méthode d'étalonnage pour embrayage ou freins de transmission

(30) Priorität: 18.10.1993 US 136863
(43) Veröffentlichungstag der Anmeldung: 19.04.1995
(73) Patentinhaber: DEERE & COMPANY, Moline, Illinois 61265 (US)
(72) Erfinder: Testerman, Michael Duane, Dearing, Kansas 67340 (US)
(74) Vertreter: Feldmann, Bernhard

(56) Entgegenhaltungen:
- US-A- 3 155 040
- US-A- 4 989 471
- US-A- 5 224 577
- US-A- 5 343 994

## Beschreibung

Die Erfindung betrifft ein Eichverfahren oder ein Determinationsverfahren zur Bestimmung eines Betriebsdrucks, der erforderlich ist, um ein anfängliches Anlegen der elektrohydraulisch betätigbaren Getriebebrems- oder -kupplungselemente in einem Lastschaltgetriebe herbeizuführen, gemäß den Merkmalen des Oberbegriffs des Patentanspruchs 1.

Es wurden bereits einige elektrohydraulische Getriebesteuerungen mit einigem Erfolg angewendet. Bei einigen dieser Steuerungen wurden Proportionalsteuerventile verwendet. Die meisten dieser Steuerungen verwenden jedoch hauptsächlich einfache Ein-Aus-Ventile mit allenfalls einer oder zwei Getriebesteuerkupplungen, die durch Proportionalsteuerventile gesteuert werden. Beispielsweise enthält ein durch die Fa. Ford New Holland, Ltd. vertriebenes Lastschaltgetriebe zwei Regelventile, die drei verschiedene Getriebesteuerkupplungen steuern. Diese Ventile werden ihrerseits durch ein elektronisches Regelgerät gesteuert. Eine derartige proportionale Steuerung ermöglicht es, daß ein Kupplungselement während des Eingriffs- und Lösevorganges des Elements moduliert wird. Das Regelgerät ermöglicht es ferner, für jeden einzelnen Gang die Modulation für ein bestimmtes Element zu variieren. In der US-A-4,855,913 ist eine andere Anordnung beschrieben, welche Ein-Aus-Ventile und wenigstens ein Proportionalsteuerventil enthält.

Bei derartigen Anordnungen mit Proportionalsteuerventilen ist es möglich und wünschenswert, die Drehmomentkapazität der Kupplungen während des Kupplungseingriffs genau zu steuern. Während das elektrische Steuersignal, das an das Steuerventil angelegt wird, sehr genau vorgegeben werden kann, verursachen Herstellungstoleranzen der Ventile und des Getriebes große Abweichungen zwischen verschiedenen Fahrzeugen. Ist es bekannt, welches elektrische Steuersignal dem anfänglichen Kupplungseingriffsdruck, der erforderlich ist, damit die Kupplung gerade beginnt, Drehmomente zu übertragen, entspricht, so kann dieses Steuersignal verwendet werden, um das Schaltsignal für diese Kupplung während der Umschaltungen so zu modifizieren, daß sich eine optimierte Steuerung ergibt.

Die US-A-4,855,913 offenbart beispielsweise, daß die Schlüsselparameter der Steueranordnung den anfänglichen Kupplungseingriffsdruck (bezeichnet mit DC-MAX) und die Schnellfüllkupplungslaufzeit (bezeichnet mit T1) enthalten. Es wird ferner bemerkt, daß DC-MAX und T1 durch Labor- oder Feldtests bestimmt werden müssen. Es wird kein Verfahren angegeben, wie diese Werte ermittelt werden können.

Die US-A-4,989,471 beschreibt ein Eichverfahren oder eine Methode zur Ermittlung des Drucks, der erforderlich ist, um einen Kupplungseingriff bei einer Getriebesteueranordnung auf Mikroprozessorbasis zu erzielen. Das Verfahren beinhaltet bei abgebremster Getriebeausgangswelle die stufenweise Erhöhung des Kupplungsdrucks und das Sichern eines Wertes, der dem Kupplungsdruck entspricht, bei dem die Motordrehzahl abzunehmen beginnt. Dieses Verfahren erfordert jedoch eine Betätigung der Fahrzeugbremsen, um eine Drehung der Getriebeausgangswelle zu verhindern. Diese Prozedur kann gefahrvoll sein, wenn die Fahrzeugbremsen nicht betätigt sind oder wenn sie versagen, da dann eine unerwünschte Fahrzeugbewegung während des Eichvorgangs einsetzen kann. Die US-A-4,989,471 beschreibt auch ein alternatives Eichverfahren für eine Kupplung, bei dem erfaßt wird, wann die Kupplung genügend Drehmoment überträgt, um das Fahrzeug zu bewegen. Dieses alternative Verfahren erfordert, daß das Fahrzeug an einen Ort gebracht wird, an dem hinsichtlich der Fahrzeugbewegung keine Sicherheitsbedenken bestehen. Das von einem derartigen Verfahren abgeleitete Ergebnis kann von den Eigenschaften des Untergrunds, auf dem das Fahrzeug steht, abhängen.

Die US-A-5,082,097 bezieht sich auf ein Getrieberegelgerät für ein Getriebe, welches eine magnetspulenbetätigte Kupplung und ein Magnetventil zur Betätigung der Kupplung enthält. Es wird ein Eichverfahren oder eine Anordnung zur Ermittlung eines Stromsignals, welches dem Punkt entspricht, bei dem die Kupplung beginnt, ein Drehmoment zu übertragen, offenbart. Diese Anordnung enthält eine Fahrzeugüberwachungseinrichtung, welche ein Ansprechsignal erzeugt, wenn die Kupplung beginnt, einen vorherbestimmten Drehmomentenbetrag zu übertragen, sowie einen Speicher zur Speicherung eines Eichwertes, der dem Wert des Stromes entspricht, bei welchem die Kupplung den vorherbestimmten Drehmomentenbetrag zu übertragen beginnt. Diese Anordnung erfordert jedoch ein Regelgerät, welches ein gesteuertes Stromsignal erzeugt, sowie einen Stromüberwachungskreis, welcher ein Signal erzeugt, das dem Stromfluß zu dem Magnetventil entspricht. Ferner ist das Schwellwertsignal dieser Anordnung entweder die Fahrzeuggeschwindigkeit oder ein Abfall der Motordrehzahl. Das Eichverfahren scheint keine Trennung der Getriebeausgangswelle von der Antriebswelle des Fahrzeugs vorzusehen. Im Ergebnis scheint das in der US-A-5,082,097 beschriebene Eichverfahren dem in der US-A-4,989, 471 beschrieben Verfahren ähnlich zu sein. Es scheint, daß eine Fahrzeugbewegung bzw. das Anlegen der Fahrzeugbremsen während der Durchführung des Eichverfahrens zugelassen werden muß.

Ein anderes Kalibrierverfahren der eingangs genannten Art wird in der US-A-5,224,577 beschrieben. Bei diesem Verfahren wird die Getriebeausgangswelle von den Antriebsrädern getrennt und die Antriebsmaschine bei einer bestimmten Drehzahl betrieben. Abhängig davon, welches Steuerelement geeicht werden soll, werden bestimmte Steuerkupplungen, nicht jedoch die zu eichende Steuerkupplung eingerückt, um eine Drehung eines Teils der zu eichenden Steuerkupplung zu verhindern. Dann wird die Einschaltdauer eines pulsweitenmodulierten Spannungssignals, das an das Proportionalsteuerventil angelegt ist, schrittweise modifiziert, um den an die zu eichende Steuerkupplung angelegten Druck zu erhöhen. Ferner wird die Motordrehzahl überwacht. Wenn die überwachte Motordrehzahl um einen vorgebbaren Betrag abfällt, wird ein Wert als Kupplungseichwert abgespeichert, der dem an das Proportionalsteuerventil angelegten Druck entspricht. Um das Füllvolumen eines Elements zu bestimmen, wird das Element voll unter Druck gesetzt, während die Motordrehzahl überwacht wird. Die Zeit des Unterdrucksetzens, die erforderlich ist, um einen Abfall der Motordrehzahl zu verursachen, repräsentiert das Flüssigkeitsvolumen, das zum Füllen des Elements, also bis zum Beginn einer Drehmomentübertragung, erforderlich ist. Zwar erfordert dieses Verfahren kein Abbremsen, um eine Fahrzeugbewegung zu unterbinden, es ist jedoch ein Motordrehzahlsensor erforderlich, und der Motor muß bei einer bestimmten Drehzahl betrieben werden.

Die der Erfindung zugrunde liegende Aufgabe wird darin gesehen, ein Verfahren zur Bestimmung des Betriebsdrucks anzugeben, der erforderlich ist, um ein anfängliches Anlegen eines druckbetätigten Brems- oder Kupplungselements eines Fahrzeuglastschaltgetriebes zu erreichen. Bei dem Verfahren soll weder eine Überwachung der Motordrehzahl noch der Betrieb des Motors bei einer bestimmten Drehzahl erforderlich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Gemäß der Erfindung weist die Kupplung oder Bremse des Lastschaltgetriebes einen Schmierölkanal auf, über den Schmieröl, das insbesondere der Kühlung der Kupplungs- oder Bremselemente dient, an das Kupplungspaket geleitet wird. Die Zufuhr des Schmieröls und damit auch der Schmieröldruck in dem Schmierölkanal wird in Abhängigkeit des Eingriffszustandes des Kupplungspakets gesteuert. Der hydraulische Kupplungssteuerdruck, der erforderlich ist, um das Kupplungspaket in eine anfängliche Eingriffs- oder Anlagestellung zu bringen, wird durch ein Verfahren bestimmt bzw. kalibriert, bei dem der Schmieröldruck während einer stufenweisen Erhöhung des Steuerdrucks überwacht wird. Wenn der Schmieröldruck hierbei ein bestimmtes Niveau erreicht, welches dem Anlegen des Kupplungspakets entspricht, wird der zugehörige Steuerdruck als Kalibrierdruck gesichert.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein Getriebekupplungspaket und ein Steuersystem, bei dem die vorliegende Erfindung anwendbar ist,

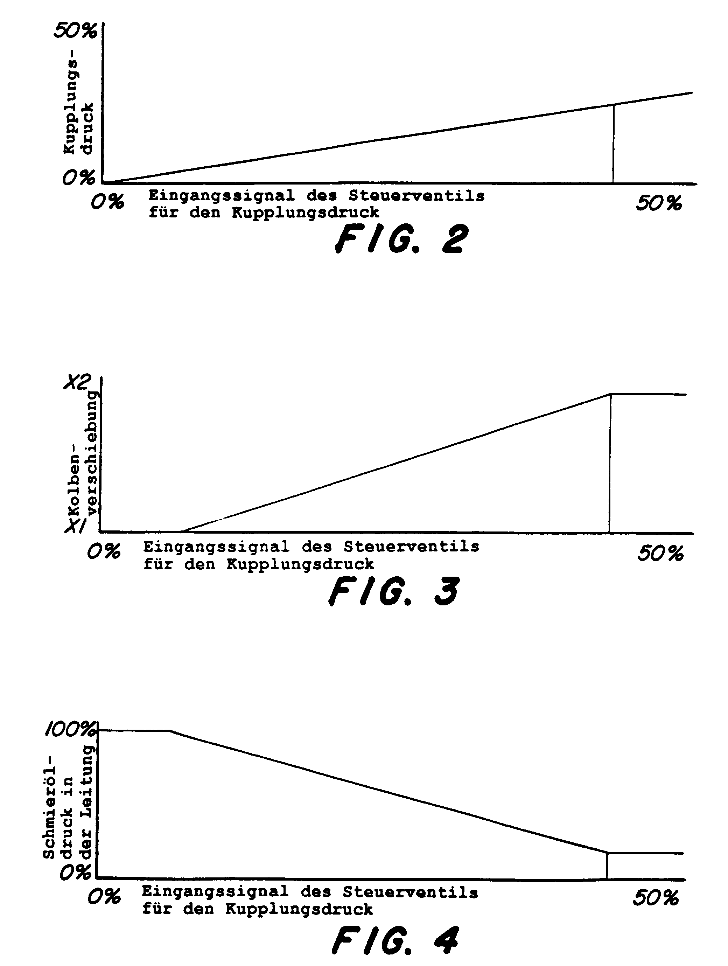

- Fig. 2: eine graphische Darstellung des Kupplungssteuerdrucks als Funktion des Eingangssignals eines Kupplungsdrucksteuerventils,
- Fig. 3: eine graphische Darstellung einer Kupplungskolbenverschiebung als Funktion des Eingangssignals eines Kupplungsdrucksteuerventils,
- Fig. 4: eine graphische Darstellung eines Kupplungsschmieröldrucks als Funktion des Eingangssignals eines Kuppungsdrucksteuerventils und
- Fig. 5: ein vereinfachtes Flußdiagramm eines Druckeichalgorithmus, der gemäß der vorliegenden Erfindung ausgeführt wird.

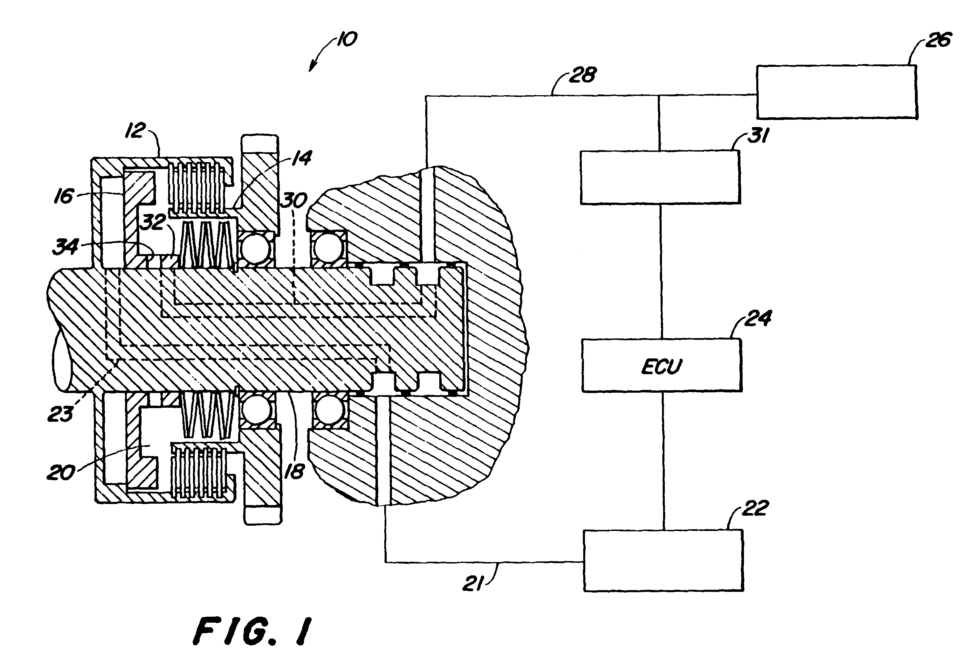

Wie Fig. 1 zeigt, enthält das Kupplungspaket 10 eines Lastschaltgetriebes zwei Brems- oder Kupplungselemente 12, 14 und ein auf einer Welle 18 angeordnetes Kolbenelement 16. Das Kupplungselement 12 und das Kolbenelement 16 schließen eine Kammer 20 ein. Das Kupplungspaket 10 wird durch ein elektromagnetisches, proportionales Steuerventil 22 betätigt. Das Steuerventil 22 seinerseits wird durch eine elektronische Steuereinheit (ECU) 24 angesteuert. Ein Betätigungsdruck wird von dem Steuerventil 22 über eine Leitung 21 und einen Kanal 23, welcher sich durch die Welle 18 erstreckt, zu dem Kolbenelement 16 geleitet.

Das Kupplungspaket 10 ist vorzugsweise Teil eines nicht näher dargestellten Getriebes, wie es beispielsweise durch die US-A-5,249,475 beschrieben wurde. Das Steuerventil 22 kann ein zweistufiges elektrohydraulisches Ventil sein, wie es in der US-A-4,741,364 beschrieben wurde.

Eine Schmierölquelle 26 steht über eine Leitung 28 und einen durch die Welle 18 verlaufenden Schmierölkanal 30 mit dem Teil der Wellenoberfläche in Verbindung, der im Bereich des Kupplungspaketes 10 liegt. Die Schmierölzufuhr zu der Kammer 20 dient vor allem der Kühlung der Brems- oder Kupplungselemente während eines reibenden Eingriffs. Ein Drucksensor 31 erfaßt den Druck in der Leitung 28 und liefert ein entsprechendes Drucksignal an die Steuereinheit 24. Der Kolben 16 hat eine zylindrische Basis 32, die sich auf der Welle 18 verschieben läßt. Eine Radialbohrung 34 in der Basis 32 wirkt mit dem Kanal 30 zusammen, um den Zufluß von Schmieröl zu dem Kupplungspaket 10 zu steuern. Wenn sich der Kolben 16 in der in Fig. 1 dargestellten Lage befindet und das Kupplungspaket 10 vollständig eingerückt ist, verschließt die Basis 32 den Schmierölkanal 30. Mit steigendem Kupplungsbetriebsdruck wird der Kolben 16 hinsichtlich der Fig. 1 nach rechts verschoben, so daß sich schießlich die Radialbohrung 34 in eine Lage verschiebt, in der sie vollständig mit dem Auslaß des Schmierölkanals 30 fluchtet und somit den Schmierölkanal 30 vollständig zum Kupplungspaket 10 öffnet.

### Eichverfahren

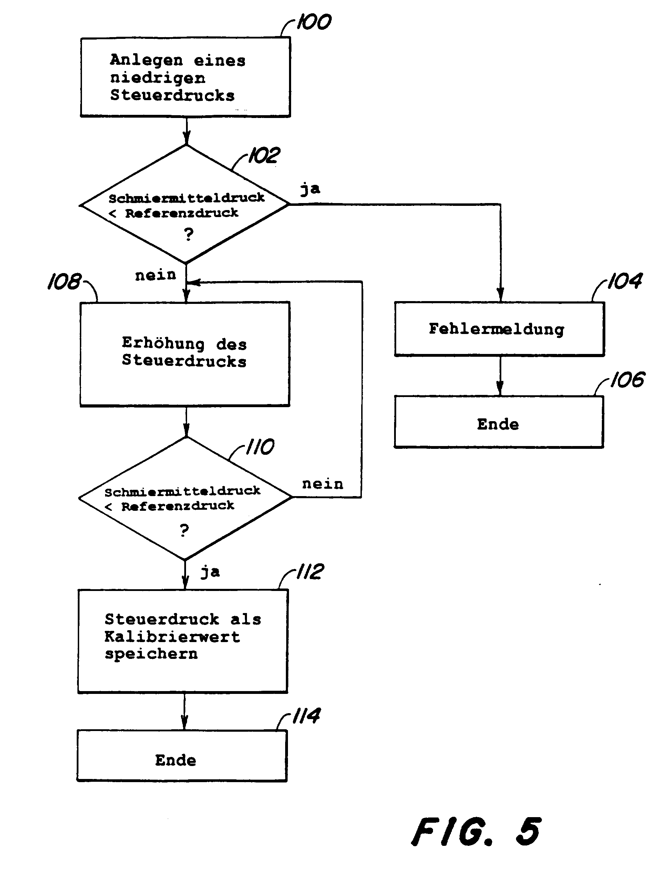

Bevor das Eichverfahren ausgeführt wird, sollte die Bedienungsperson die nicht gezeigte Betriebs- oder Parkbremse des nicht näher dargestellten Fahrzeuges betätigen. Der Motor sollte wenigstens bei seiner Leerlaufdrehzahl betrieben werden, jedoch braucht die Motordrehzahl nicht genau auf einen bestimmten Wert eingestellt zu werden. Die Steuereinheit 24 führt einen Algorithmus zur Druckeichung durch, wie er durch das logische Flußdiagramm der Fig. 5 illustriert ist. Dieser Algorithmus, bzw. das ihm zugrundeliegende Verfahren bestimmt das an das Steuerventil 22 anzulegende Ventildruckführungssignal, welches erforderlich ist, um das Kupplungspaket 10 anzulegen. Wird der Druck bei angelegtem Kupplungspaket 10 weiter erhöht, so beginnen die Kupplungsscheiben, miteinander in Eingriff zu treten und Kräfte zu übertragen.

Durch den Schritt 100 der Fig. 5 wird ein niedriger Steuerdruck an das Kupplungspaket 10 angelegt. In Schritt 102 wird das Schmiermitteldrucksignal des Sensors 31 mit einem Referenzschmiermitteldruckwert verglichen. Ist der Schmiermitteldruck kleiner als der Referenzdruck, so wird eine Fehlermeldung in Schritt 104 erzeugt und das Verfahren durch Schritt 106 beendet. Ist der Schmiermitteldruck nicht kleiner als der Referenzdruck, so bewirkt Schritt 108 eine Erhöhung des Steuerdrucks und ein Anlegen dieses erhöhten Steuerdrucks an das Kupplungspaket 10. In Schritt 110 wird das Schmiermitteldrucksignal des Sensors 31 erneut mit einem Referenzschmiermitteldruckwert verglichen. Ist der Schmiermitteldruck nicht kleiner als der Referenzdruck, so kehrt der Algorithmus zu Schritt 108 zurück. Ist der Schmiermitteldruck kleiner als der Referenzdruck, so speichert Schritt 112 den vorliegenden Steuerdruckwert als den Druckeichwert ab, und Schritt 114 beendet das Verfahren.

Das beschriebene Verfahren läßt sich wie folgt zusammenfassen: Der Kupplungsbetätigungsdruck wird stufenweise verändert bzw. erhöht, um den Kolben 16 hinsichtlich Fig. 1 nach rechts zu verschieben. Währenddessen wird das Signal des Drucksensors 31 überwacht, und der ermittelte Schmieröldruck in dem Schmiermittelkanal 30 wird periodisch mit einem Referenzdruck verglichen. Wenn ein Durchflußspalt zwischen dem Schmiermittelkanal 30 und der Radialbohrung 34 ausreichend geöffnet ist, so daß der ermittelte Schmiermitteldruck auf den Referenzdruck fällt, bedeutet dies, daß sich der Kolben 16 in eine Lage bewegt hat, in der das Kupplungspaket 10 angelegt ist. An diesem Punkt wird die vorliegende Höhe des Eingangssignals des Steuerventils 22 als Fülldruckeichwert gespeichert. Dieses Verfahren wird vorzugsweise automatisch durch ein Computerprogramm in einer elektronischen Steuereinheit 24 ausgeführt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann durch Überwachung des Kupplungsschmiermitteldrucks auch die Kupplungsfüllzeit bestimmt werden, die mit dem Ölvolumen korrespondiert, welches zum Füllen und Anlegen einer Getriebesteuerkupplung erforderlich ist. Ferner kann zusätzlich zu der Ausführung bei Inbetriebnahme des Fahrzeugs das Kalibrierverfahren auch zu verschiedenen Zeiten während des Fahrzeugbetriebs durch eine elektronische Steuereinrichtung automatisch und periodisch ausgeführt werden.

## Patentansprüche

1. Verfahren zur Bestimmung eines Parameters, der einem anfänglichen Eingriff einer Lastschaltgetriebekupplung oder-bremse, die dem Umschalten des Getriebes dient, zugeordnet ist, wobei die Lastschaltgetriebekupplung oder -bremse ein Kupplungspaket mit wenigstens zwei auf einer Welle (18) angeordneten Kupplungselementen (12, 14), die durch axiale Verschiebung relativ zur Welle (18) in Eingriff miteinander bringbar sind, sowie einen hydraulisch betätigbaren, relativ zur Welle (18) axial verschiebbaren Kolben (16) enthält, durch den in Abhängigkeit eines Kupplungssteuerdrucks wenigstens ein Kupplungselement (12) axial verschiebbar ist, wobei der Parameter schrittweise verändert wird, so daß das eine Kupplungselement (12) schrittweise in die Einrückstellung mit dem anderen Kupplungselement (14) gebracht wird, dadurch gekennzeichnet, daß bei einer Lastschaltgetriebekupplung oder -bremse mit
- einem Schmiermittelsystem mit einer Schmiermittelquelle (26) und einem sich durch die Welle (18) erstreckenden Schmiermittelkanal (30), der der Übertragung von Schmiermittel zu dem Kupplungspaket (10) dient, und mit
- einer Schmiermittelöffnung (34) in dem Kolben (16), wobei die Schmiermittelöffnung (34) mit dem Schmiermittelkanal (30) zusammenwirkt, um eine Schmiermittelverbindung zu dem Kupplungspaket (10) zu unterbinden, sofern die Kupplungselemente (12, 14) entkuppelt sind, und um eine Schmiermittelverbindung zu dem Kupplungspaket (10) zu öffnen, wenn die Kupplungselemente (12, 14) einrücken,
folgende Verfahrensschritte ausgeführt werden:
- periodisches Erfassen des Drucks in dem Schmiermittelkanal (30) und Vergleichen des Schmiermitteldrucks mit einem Referenzdruckwert und
- Speichern des aktuellen Parameterwertes als Eichwert, wenn der erfaßte Schmiermitteldruck gleich dem Referenzdruckwert ist.

2. Verfahren nach Anspruch 1, dadurch gekennzeichnet, daß der Parameter der Steuerdruck ist, der dem anfänglichen Anlegen der Kupplungselemente (12, 14) entspricht.

## Claims

1. A method of determining a parameter which is associated with the initial engagement of a power-shift transmission clutch or brake, which serves to shift the transmission, wherein the power-shift transmission clutch or brake includes a clutch pack with at least two clutch elements (12, 14) arranged on a shaft (18) and which can be brought into engagement with one another by axial displacement relative to the shaft (18), as well as a hydraulically actuated piston (16) movable axially relative to the shaft (18), through which at least one clutch element (12) is axially movable in dependence on a clutch control pressure, wherein the parameter is altered in steps, so that the one clutch element (12) is brought stepwise into the engaged position with the other clutch element (14), characterized in that, with a power-shift transmission clutch or brake
- with a lubricant system with a lubricant source (26) and a lubricant channel (30) extending through the shaft (18) and which serves to transmit lubricant to the clutch pack (10), and
- with a lubricant opening (34) in the piston (16), wherein the lubricant opening (34) cooperates with the lubricant channel (30) in order to prevent a lubricant connection to the clutch pack (10) when the clutch elements (12) are uncoupled and in order to open a lubricant connection to the clutch pack (10) when the clutch elements (12, 14) engage,
the following method steps are carried out:
- periodically detecting the pressure in the lubricant channel (30) and comparing the lubricant pressure with a reference pressure value and
- storing the current parameter value as a calibration value when the detected lubricant pressure is equal to the reference pressure value.

2. A method according to claim 1, characterized in that the parameter is the control pressure which corresponds to the initial application of the clutch elements (12, 14).

## Revendications

1. Procédé pour déterminer un paramètre, qui est associé à un actionnement initial d'un embrayage ou d'un frein de boîte de vitesses commandée en charge, qui sert à exécuter la commutation de la boîte de vitesses, selon lequel l'embrayage ou le frein de la boîte de vitesses commandée en charge contient un paquet d'embrayage comportant au moins deux éléments d'embrayage (12,14), qui sont montés sur un arbre (18) et peuvent être amenés à engrener réciproquement sous l'effet d'un déplacement axial par rapport à l'arbre (18), ainsi qu'un piston (16) pouvant être actionné hydrauliquement et déplaçable axialement par rapport à l'arbre (18) et à l'aide duquel au moins un élément d'embrayage (12) est déplaçable axialement en fonction d'une pression de commande de l'embrayage, le paramètre étant modifié pas-à-pas de sorte qu'un élément d'embrayage (12) est amené pas-à-pas dans la position d'enclenchement avec l'autre élément d'embrayage (14), caractérisé en ce que dans le cas d'un embrayage ou d'un frein de boîte de vitesses commandée en charge comprenant :
- un système de lubrification comportant une source de lubrifiant (26) et un canal (30) pour le lubrifiant, qui traverse l'arbre (18) et sert à transmettre le lubrifiant au paquet d'embrayage (10), et
- une ouverture (34) pour le lubrifiant, aménagée dans le piston (16), l'ouverture (34) pour le lubrifiant coopérant avec le canal (30) pour le lubrifiant, pour interrompre une liaison de transmission du lubrifiant avec le paquet d'embrayage (10), dans la mesure où les éléments d'embrayage (12,14) sont désaccouplés, et pour ouvrir une liaison de transmission du lubrifiant avec le paquet d'embrayage (10) lorsque les éléments d'embrayage (12,14) s'enclenchent,
les étapes opératoires suivantes sont exécutées :
- détection périodique de la pression dans le canal (30) pour le lubrifiant et comparaison de la pression du lubrifiant à une valeur de pression de référence, et
- mémorisation de la valeur actuelle du paramètre en tant que valeur d'étalonnage, lorsque la pression détectée du lubrifiant est égale à la valeur de pression de référence.

2. Procédé selon la revendication 1, caractérisé en ce que le paramètre est la pression de commande, qui correspond à l'enclenchement initial des éléments d'embrayage (12,14).
